# EUROPEAN PATENT APPLICATION

(11) **EP 0 819 630 A1**
(43) Date of publication of application: **21.01.1998**
(21) Application number: 97112015.9
(22) Date of filing: 15.07.1997
(51) Int. Cl.: B65G 57/03, B65G 57/09, B65G 57/11

(54) **Equipment for the automatic stacking of metal sheets leaving a blanking station**

(30) Priority: 17.07.1996 IT TO960622
(71) Applicant: FIAT AUTO S.p.A., 10135 Torino (IT)
(72) Inventor: Pulli, Tommaso, 10042 Nichelino (Torino) (IT)
(74) Representative: Marchitelli, Mauro

(57) **Abstract**

Equipment for the automatic stacking of metal sheets leaving a blanking station includes a slide plane (22) inclined towards a stacking station (14, 16) for the sheets and having first guide means (32, 34) for positioning the sheets in their plane and second guide means (38, 40, 44) for guiding the fall of the sheets towards the stacking station (14, 16).

## Description

The present invention relates to equipment for the automatic stacking of metal sheets leaving a blanking station.

The object of the present invention is to provide simple and economical equipment which enables blanked sheet-metal profiles to be stacked automatically, without the use of robots or handling devices and which enables personnel to be used solely for supervisory purposes.

According to the present invention, this object is achieved by equipment which includes a slide plane inclined towards a stacking station for the sheets, having first guide means for positioning the sheets in their plane by virtue of the movement of the sheets along the slide plane, the equipment further including second guide means at the end of the slide plane for guiding the fall of the sheets towards the stacking station.

Further characteristics and advantages of the present invention will become clearer during the course of the detailed description which follows, given purely by way of non-limitative example, with reference to the appended drawings, in which:
Figure 1 is a perspective view of equipment according to the present invention, and
Figure 2 is a schematic section taken on the line II-II of Figure 1.

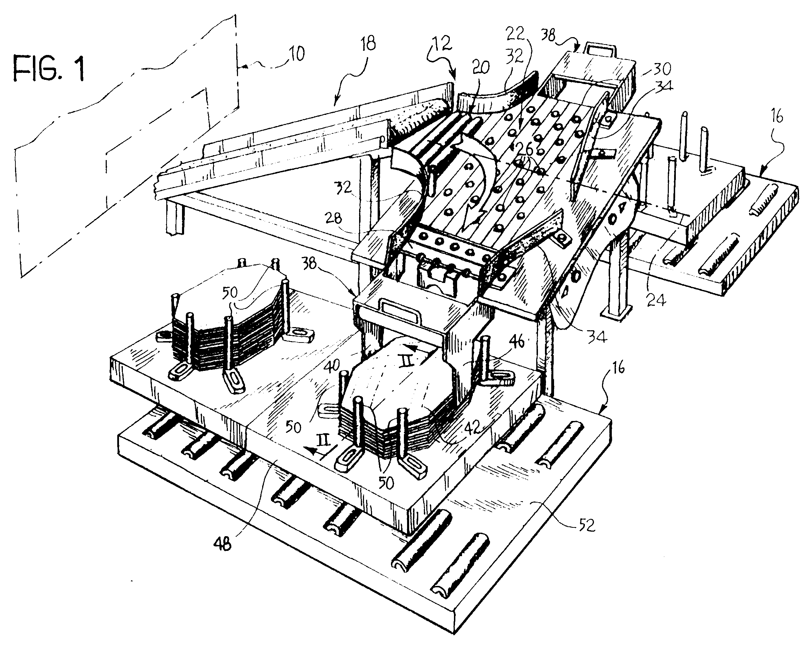

With reference to the drawings, the output section of a blanking station for metal sheets is generally indicated 10. Downstream of the output station 10 is equipment 12 for stacking the metal sheets coming from the blanking station in an ordered manner. The equipment 12 has the purpose of orienting and guiding the blanked metal sheets towards a stacking station 14. As will be further explained below, the equipment 12 is able to serve two stacking stations, indicated 14 and 16 in Figure 1, alternately.

The equipment 12 includes a conveyor belt 18 which takes the metal sheets from the output section 10 and raises them to an input section 20 of a slide plane 22. The slide plane 22 is pivoted about a horizontal axis 24 and may be inclined alternately to the stacking station 14 and to the stacking station 16. The pivoting movement of the plane 22 about the axis 24 is driven by conventional actuators (not illustrated). A plurality of balls 23 is located in the upper surface of the slide plane to facilitate the sliding of the metal sheets from the input section 20 to an output section 28 or 30 of the slide plane 22.

The slide plane 22 has stationary guide walls 32 and 34 for positioning the metal sheets in their plane, solely by virtue of their sliding movement down the plane 22. The shape of the guide surfaces 32 and 34 depends on the shape and dimensions of the metal sheets as well as on the orienting movement which it is desired to achieve.

Figure 1 shows schematically an arrangement of the guide walls 32, 34 which enables the metal sheets to be rotated through 90° and which constrains the sheets to follow the path shown schematically by the arrow. Optionally, the guide walls 32 and 34 may be movable relative to the plane 22 so that their positions can be adjusted to enable the metal sheets to be moved precisely and without jamming. As well as guiding the movement of the metal sheets from the input section 20 to the output section 28 or 30, the guide walls 32 and 34 also have the purpose of ensuring that the sheets are positioned precisely at the output section 28.

The output sections 28 and 30 of the guide plane 22 also have second guide means for guiding the fall of the metal sheets towards the stacking station 14 or 16. In the embodiment illustrated in the drawings, these guide means are in the form of a stacking member 38 which is generally box-shaped and has a pair of side walls 40 located laterally of the stack of sheets 42.

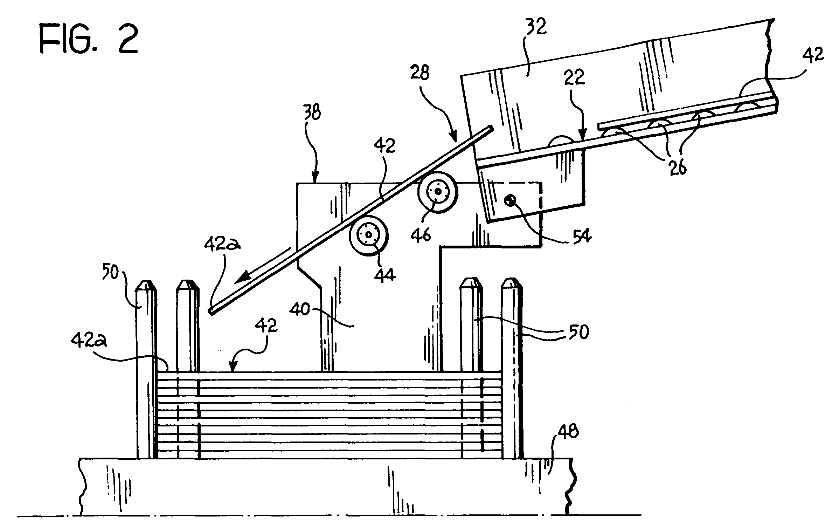

As seen in greater detail in Figure 2, each side wall 40 of the stacking members 38 carries a lateral slide member 44 constituted, for example, by a roller bearing, which has the purpose of guiding the fall of the metal sheets 42 to the stacking station. The position of the lateral slide members 44 is determined by the geometry of the sheets 42 so as to ensure that the leading edge portion 42a of each sheet falls into correspondence with the leading edge portions 42a of previously stacked sheets. This enables a stack to be formed spontaneously without any of the sheets 42 jamming. To guide the fall of the sheets 42 to the stacking station, a plurality of rolling bearings or idle rollers 46 is also provided in the output section 28 of the slide plane 22. The sheets 42 are collected on a platform 48 provided with vertical pins 50 which contain the stack of sheets 42 laterally. This same platform may have several collecting sections and may be slidable on a roller plane 52.

As shown in Figure 2, the stacking member 38 is articulated to the slide plane about a horizontal axis 54 and is thus movable between the lowered, operative position, illustrated in Figures 1 and 2 and a raised, inoperative position which allows the platform 48 to be removed when the stack of sheets 42 reaches a predetermined height.

## Claims

1. Equipment for the automatic stacking of metal sheets (42) at the output of a blanking station, characterised in that it includes a slide plane (22) inclined towards a stacking station (14) for the sheets (42), having first guide means (32, 34) for positioning the sheets in their plane by virtue of the movement of the sheets (42) along the slide plane (22), the equipment further including second guide means (38, 40, 44) at the end of the slide plane for guiding the fall of the sheets (42) towards the stacking station (14, 16).

2. Equipment according to Claim 1, characterised in that the second guide means comprise a stacking member (38) of generally box shape located at the end of the slide plane (22), the stacking member (38) having a pair of side walls (40) located laterally of the stack of sheets (42).

3. Equipment according to Claim 2, characterised in that the stacking member carries a pair of lateral slide members (44) for guiding the fall of the metal sheets (42) to the stacking station (14, 16).

4. Equipment according to Claim 1, characterised in that the slide plane (22) has an input section (20) and an output section (28, 30) and stationary guide walls (32, 34) which guide each sheet (42) continuously during its sliding movement from the input section (20) to the output section (28, 30) so as to dispose the sheet (42) in a predetermined orientation at the output section (28, 30).

5. Equipment according to any one of the preceding claims, characterised in that the slide plane (22) is pivoted about a horizontal axis (24) to enable it to serve two stacking stations (14, 16) alternatively.
